# DEMANDE DE BREVET EUROPEEN

(11) **EP 1 223 123 A1**
(43) Date de publication de la demande: **17.07.2002**
(21) Numéro de dépôt: 01490055.9
(22) Date de dépôt: 28.12.2001
(51) Int. Cl.: B65G 47/51, B65B 63/02, B65B 35/04

(54) **Procédé et dispositif de stockage en lignes de paquets de produits plats tels que, notamment, changes ou serviettes périodiques**

(30) Priorité: 15.01.2001 FR 0100472
(71) Demandeur: Société Industrielle d'Etudes et de Realisation Elétriques et Mecaniques S.I.E.R.M. Société Anonyme, 59560 Comines (FR)
(72) Inventeur: Remericq, Maurice, 59560 Comines (FR)
(74) Mandataire: Duthoit, Michel

(57) **Abrégé**

L'invention concerne un procédé et un dispositif de stockage en ligne de paquets (2) de produits plats (1), tels que, notamment changes ou serviettes périodiques, dans lequel on transporte lesdits produits (1) entre un ou plusieurs postes d'entrée (3) et un ou plusieurs postes de sortie (4) et dans lequel :
- on introduit lesdits paquets (2) selon un débit d'arrivée au niveau du ou desdits postes d'entrée (3) entre des moyens de serrage (6), mobiles avec lesdits paquets (2), lesdits moyens de serrage (6) étant dans une première configuration, dite ouverte,
- on comprime lesdits produits les uns contre les autres en faisant passer lesdits moyens de serrage (6) de leur configuration ouverte à une seconde configuration, dite de maintien des produits,
- on dirige lesdits paquets (2) vers le ou lesdits postes de sortie (4) au niveau duquel ou desquels on les éjecte, selon un débit de sortie, adaptés en relation avec le débit d'arrivée, pour gérer une accumulation de paquets (2) entre le ou lesdits postes d'entrée (3) et le ou lesdits postes de sortie (4).

## Description

L'invention concerne un procédé et un dispositif de stockage en lignes de paquets de produits plats tels que, notamment, changes ou serviettes périodiques.

Toutefois, bien que plus particulièrement prévue pour de telles applications, l'invention pourra être utilisée avec tout autre type de produits plats.

De manière connue, les changes ou serviettes périodiques sont fabriqués en continu, unitairement, puis regroupés par paquets avant d'être directement emballés. Tout problème intervenant au niveau de l'unité d'emballage se répercute ainsi rapidement en amont et, même pour un retard minime, il est nécessaire d'arrêter l'unité de fabrication.

Ceci génère plusieurs inconvénients. En premier lieu, un nombre important de produits obtenus après redémarrage doivent être mis au rebut compte tenu de leur qualité aléatoire. Ces arrêts nuisent également aux matériels mis en oeuvre qui sont adaptés à un fonctionnement en continu.

Le but de la présente invention est de pallier les inconvénients précités, sans nuire aux cadences. Pour cela, une première solution serait d'effectuer un stockage en ligne des produits juste en aval de l'unité de fabrication. Toutefois, comme à ce stade, ils défilent de manière unitaire, cela nécessiterait des installations volumineuses pour obtenir un résultat significatif.

Selon l'invention, on se propose de stocker les produits après qu'ils aient été regroupés en paquets.

L'invention concerne ainsi un procédé de stockage en ligne de paquets de produits plats tels que, notamment, changes ou serviettes périodiques, dans lequel on transporte lesdits produits entre un ou plusieurs postes d'entrée, au niveau duquel ou desquels lesdits paquets sont introduits selon un débit d'arrivée, et un ou plusieurs postes de sortie, au niveau duquel ou desquels lesdits paquets sont éjectés selon un débit de sortie, et dans lequel on adapte le débit de sortie en relation avec le débit d'arrivée pour gérer une accumulation de paquets entre le ou lesdits postes d'entrée et le ou lesdits postes de sortie.

De plus, pour ne pas entraîner une déformation des paquets, on prévoit d'effectuer l'introduction de ceux-ci au niveau du ou des postes d'entrée entre des moyens de serrage, mobiles avec lesdits paquets, lesdits moyens de serrage étant dans une première configuration, dite ouverte, puis de comprimer lesdits produits les uns contre les autres en faisant passer lesdits moyens de serrage de leur configuration ouverte à une seconde configuration, dite de maintien des produits, avant de les diriger vers le ou lesdits postes de sortie.

Pour résoudre les problèmes évoqués plus haut, l'invention concerne également un dispositif de stockage en ligne de paquets de produits plats tels que, notamment changes ou serviettes périodiques, comprenant un ou plusieurs postes d'entrée et un ou plusieurs postes de sortie desdits paquets ainsi que des moyens de transport desdits paquets entre le ou lesdits postes d'entrée et le ou lesdits postes de sortie, ledit dispositif comprenant en outre :
- des moyens de serrage, mobiles avec lesdits moyens de transport des paquets, lesdits moyens de serrage étant aptes à passer d'une première configuration, dite ouverte, permettant l'introduction des paquets dans lesdits moyens de transport selon un débit d'arrivée à une seconde configuration, dite de maintien des produits, dans laquelle ces derniers sont comprimés les uns contre les autres,
- des moyens pour faire passer lesdits moyens de serrage de leur configuration ouverte à leur configuration de maintien des produits, prévus au niveau du ou desdits postes d'entrée,
- des moyens d'éjection des paquets, prévus au niveau du ou desdits postes de sortie pour le départ des paquets selon un débit de sortie,
- des moyens pour gérer une accumulation des paquets entre le ou les postes d'entrée et le ou les postes de sortie, en fonction du débit d'entrée et/ou du débit de sortie.

Selon un mode particulier de réalisation de l'invention, les moyens de transport comprennent une pluralité de nacelles, chaque dite nacelle étant apte à accueillir au moins undit paquet, tandis que lesdits moyens de serrage sont constitués de deux chariots coulissants selon une même direction, dite de prise en étau, sur ladite nacelle, et de moyens de maintien desdits chariots selon un écartement donné, lesdits moyens de maintien des chariots étant eux-mêmes constitués de premiers et seconds moyens de blocage, aptes à s'engrener l'un dans l'autre, les premiers moyens de blocage étant assujettis audit chariot et les seconds moyens de blocage étant articulés par rapport à ladite nacelle, ainsi que de moyens de verrouillage, portés par la nacelle, lesdits moyens de verrouillage étant aptes à forcer l'engrenage desdits seconds moyens de blocage dans lesdits premiers moyens de blocage. Un tel mode de réalisation présente l'avantage de faciliter l'adaptation des moyens de transport à la prise en charge de paquets de tailles différentes.

On peut d'ailleurs noter que de tels moyens de transport et de serrage peuvent être utilisés dans d'autres dispositifs de convoyage de produits plats tels que, notamment, des dispositifs de stockage, hors ligne.

Selon un autre mode particulier de réalisation de l'invention, lesdits moyens d'éjection comprennent une butée de poussée et des moyens de déplacement de ladite butée de poussée selon une première direction, constitués de moyens aptes à générer un effort selon une seconde direction, sensiblement perpendiculaire à ladite première direction, et de moyens de transmission dudit effort, coopérant avec ladite butée, lesdits moyens de transmission étant eux-mêmes constitués de deux bras, formant les deux côtés égaux d'un triangle isocèle dont l'axe de symétrie est défini par ladite première direction, et de moyens pour rapprocher / écarter lesdits bras en déformant ledit triangle tout en maintenant son caractère isocèle et l'orientation de son axe de symétrie.

Un tel mode de réalisation permet de disposer de moyens d'éjection d'encombrement limité.

On peut d'ailleurs noter que, comme dans le cas précédent, lesdits moyens d'éjection peuvent être utilisés dans d'autres dispositifs de convoyage tels que, notamment, des dispositifs de stockage hors ligne.

L'invention et ses différents avantages seront mieux compris à la lecture de la description suivante, accompagnée des dessins en annexe parmi lesquels :
- la figure 1 illustre en vue de côté un exemple de réalisation du dispositif conforme à l'invention,
- les figures 2a et 2b reprennent de manière schématique la figure 1, le dispositif conforme à l'invention étant dans deux états différents,
- la figure 3 est une vue de face simplifiée du poste d'entrée du dispositif de la figure 1, représentant certains éléments de l'invention,
- les figures 4a et 4b sont des vues de côté du poste d'entrée du dispositif de la figure 1 illustré dans deux états différents, certaines des pièces étant représentées en transparence,
- la figure 5 reprend la figure 3 en représentant d'autres éléments de l'invention,
- la figure 6 est une vue de dessus du poste de sortie du dispositif de la figure 1,
- la figure 7 est une vue de dessus illustrant le principe de fonctionnement des moyens représentés à la figure 6.

L'invention concerne tout d'abord un procédé de stockage de paquets de produits plats.

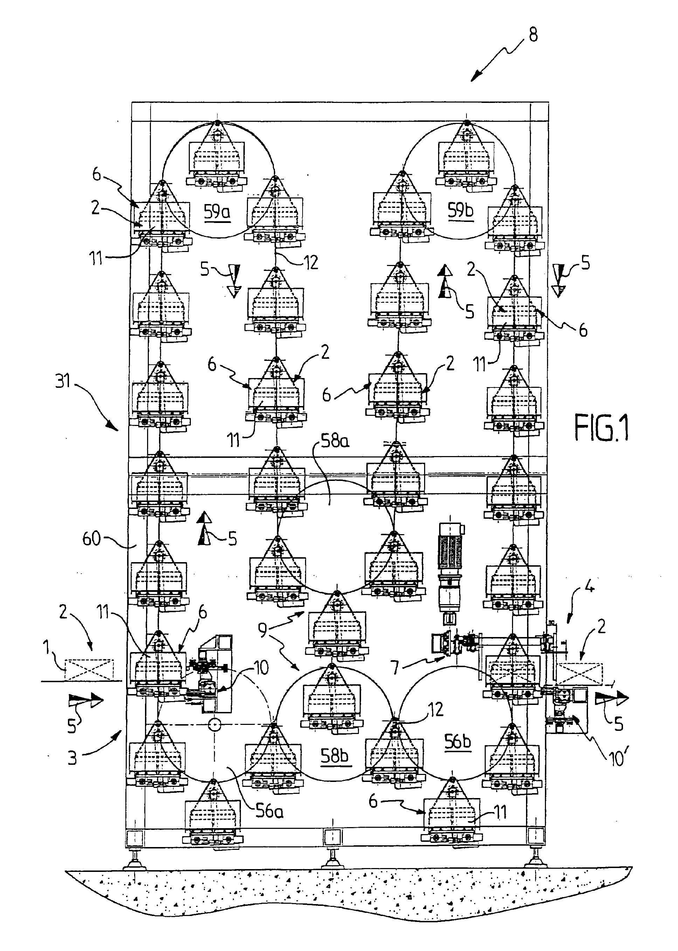

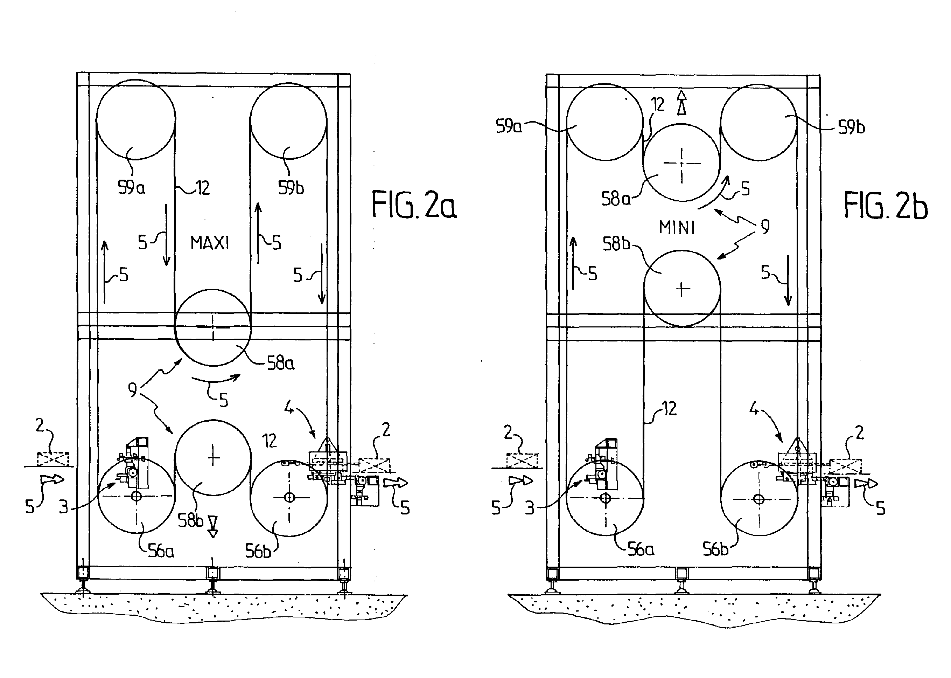

Comme illustré aux figures 1 et 2, selon ledit procédé, on transporte lesdits produits 1, regroupés sous forme de paquets 2, entre un ou plusieurs postes d'entrée 3 et un ou plusieurs postes de sortie 4, au niveau duquel ou desquels ils sont éjectés selon un débit de sortie. D'après l'exemple représenté, la trajectoire des paquets 2 est indiquée par les flèches repérées 5.

Dans lesdits paquets 2, lesdits produits 1 sont positionnés, par exemple, face contre face, les uns contre les autres. Pour des produits 1 de forme sensiblement rectangulaire, les paquets 2 pourront être de forme sensiblement parallélépipédiques. Lesdits produits 1 circulent, notamment, sur leur tranche.

Pour compenser les effets des incidents de production pouvant intervenir en amont du ou des postes d'entrée 3 et/ou en aval du ou des postes de sortie 4, le débit de sortie des paquets 2 est adapté à leur débit d'arrivée. On peut ainsi gérer une accumulation de paquets 2 entre le ou lesdits postes d'entrée 3 et le ou lesdits postes de sortie 4. Plus précisément, si le débit de sortie est inférieur au débit d'entrée, on crée alors une accumulation de paquets 2, en attendant que la situation se rétablisse et que les deux débits redeviennent égaux. Avec un débit de sortie supérieur au débit d'entrée, on résorbe l'accumulation, sans avoir eu à arrêter la production.

Bien naturellement, tant qu'aucun incident n'intervient, les débits d'entrée et de sortie peuvent être maintenus à la même valeur avec une accumulation de paquets minimale, voire nulle.

On dispose ainsi d'un procédé de stockage en ligne des produits 1, d'autant plus efficace que ceux-ci sont déjà regroupés en paquets.

Comme plus particulièrement illustré aux figures 2a et 2b, pour gérer ladite accumulation, on fait, par exemple, circuler lesdits paquets 2 entre le ou les postes d'entrée 3 et le ou les postes de sortie 4 selon une trajectoire de longueur variable, fonction du débit d'entrée et/ou de sortie.

Lorsque le débit d'entrée est supérieur au débit de sortie, la trajectoire s'allonge pour aboutir à un nombre de paquets accumulés maximum, comme à la figure 2a. Dans le cas inverse, la longueur de la trajectoire diminue pour arriver à un nombre de paquets accumulés minimum, comme illustré à la figure 2b. En cas d'égalité de débit, la longueur de la trajectoire est constante.

Selon cette solution, on peut fonctionner avec des postes d'entrée 3 et/ou de sortie 4 fixes et avec des paquets 2 maintenus à intervalle constant les uns des autres.

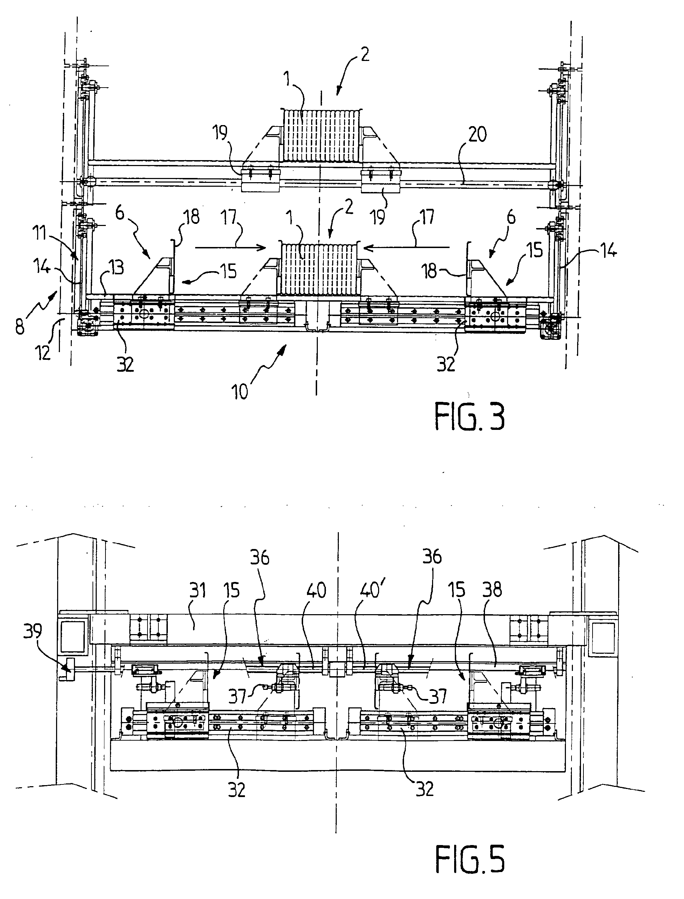

Cela étant, comme illustré à la figure 3, on introduit lesdits paquets 2 au niveau du ou des postes d'entrée 3 entre des moyens de serrage 6, mobiles avec lesdits paquets 2, lesdits moyens de serrage 6 étant dans une première configuration, illustrés en trait plein, dite ouverte, puis on comprime lesdits produits 1 les uns contre les autres en faisant passer lesdits moyens de serrage 6 de leur configuration ouverte à une seconde configuration, illustrée en trait mixte, dite de maintien des produits, avant de diriger lesdits paquets 2 vers le ou lesdits postes de sortie 4.

On évite ainsi la déformation des paquets 2 lors de leur transport, sans avoir à lier les produits 1 entre eux, ces derniers étant maintenus les uns contre les autres par les moyens de serrage 6 de leur départ du ou des postes d'arrivée 3 à leur arrivée au ou aux postes de sortie 4.

Au niveau du ou desdits postes d'entrée 3, lesdits produits 1 sont comprimés les uns contre les autres, par exemple, selon une direction sensiblement orthogonale à leur face.

Au niveau du ou desdits postes de sortie 4, les produits 1 sont éjectés alors qu'ils sont encore, éventuellement, comprimés les uns contre les autres.

Afin de pouvoir traiter des flux de paquets de tailles variables, c'est-à-dire, par exemple, contenant un nombre plus ou moins grand de produits plats 1, on pourra adapter ladite configuration de maintien selon la taille des paquets à transporter.

Si l'on se reporte de nouveau à la figure 1, on constate que l'on pourra faire circuler lesdits moyens de serrage 6 en boucles en les dirigeant, après éjection des paquets, du ou desdits postes de sortie 4 vers le ou lesdits postes d'entrée 3. On fonctionne alors en circuit fermé, ce qui permet de limiter le nombre de moyens de serrage 6 à employer.

Selon ce mode de réalisation, il faudra bien naturellement faire passer lesdits moyens de serrage 6 de leur configuration de maintien des produits à leur configuration ouverte. Comme évoqué plus haut, une telle opération a lieu au plus tôt, par exemple, après éjection des paquets transportés. Au plus tard, elle se produira au niveau du ou des postes d'arrivée 3.

L'invention concerne également un dispositif de stockage en ligne de paquets de produits plats destinés, notamment, à la mise en oeuvre du procédé décrit plus haut.

Ledit dispositif comprend un ou plusieurs postes d'entrée 3, aptes à accueillir lesdits paquets 2 selon un débit d'arrivée et un ou plusieurs postes de sortie 4, aptes à permettre leur départ selon un débit de sortie grâce à des moyens d'éjection 7. Il comprend encore des moyens de transport 8 desdits paquets 2 entre le ou les postes d'entrée 3 et le ou les postes de sortie 4, ainsi que des moyens 9 pour gérer une accumulation des paquets 2 entre le ou les postes d'entrée 3 et le ou postes de sortie 4, en fonction du débit d'entrée et/ou du débit de sortie. Il permet ainsi de constituer des réserves de produits, en ligne.

En outre, afin d'éviter la déformation des paquets, ledit dispositif comprend :
- des moyens de serrage 6, mobiles avec lesdits moyens de transport 8 des paquets, lesdits moyens de serrage étant aptes à passer d'une première configuration, dite ouverte, permettant l'introduction des paquets dans lesdits moyens de transport selon le débit d'arrivée à une seconde configuration, dite de maintien des produits, dans laquelle ces derniers sont comprimés les uns contre les autres,
- des moyens 10 pour faire passer lesdits moyens de serrage de leur configuration ouverte à leur configuration de maintien des produits, prévus au niveau du ou desdits postes d'entrée 3.

Lesdits moyens de transport 8 suivent, par exemple, une trajectoire en boucle. Ledit dispositif comprend alors des moyens 10' pour faire passer lesdits moyens de serrage de leur configuration de maintien des produits à leur configuration ouverte, prévus dans le sens de progression des moyens de transport 8, entre le ou lesdits postes de sortie 4 et le ou lesdits postes d'entrée 3 et/ou au niveau de ceux-ci.

Selon le mode de réalisation illustré, lesdits moyens 10' pour faire passer les moyens de serrage 6 de leur configuration de maintien à leur configuration ouverte sont prévus au niveau du ou desdits postes de sortie 4.

Selon un autre mode de réalisation, lesdits moyens 10' pour faire passer lesdits moyens de serrage 6 de leur configuration de maintien à leur configuration ouverte pourraient être constitués des propres moyens 10 pour faire passer les moyens de serrage 6 de leur configuration ouverte à leur configuration de maintien des produits, le fonctionnement de ces derniers étant prévu réversible. Les moyens de serrage 6 sont alors actionnés au niveau du même poste.

Lesdits moyens de transport 8 comprennent, par exemple, une pluralité de nacelles et/ou au moins une courroie 12 d'entraînement desdits nacelles, chaque dite nacelle étant apte à accueillir au moins undit paquet 2

Comme illustrées aux figures 3 à 5, lesdites nacelles sont constituées d'une plaque support 13, notamment sensiblement rectangulaire, sur laquelle sont posés lesdits paquets 2, et/ou de deux flancs 14, situés de part et d'autre de ladite plaque support 13. Il est prévu, par exemple, deuxdites courroies 12, chacune reliée à l'un des flancs 14.

Lesdits moyens de serrage 6 sont constitués, par exemple, de deux chariots 15 coulissant selon une même direction, dite de prise en étau, sur ladite nacelle 11 et de moyens 16 de maintien desdits chariots 15 selon un écartement donné. A la figure 3, l'écartement entre les chariots 15 en traits pleins correspond à la configuration ouverte tandis que l'écartement entre les chariots en traits mixtes correspond à la configuration de maintien des produits. La direction de prise en étau est repérée 17.

Lesdits chariots 15 sont constitués, notamment, d'une plaque de pression 18, destinée à être située en vis-à-vis de la face extérieure du produit 1 se trouvant à l'une des extrémités des paquets 2, et/ou d'un plot de support 19 desdites plaques de pression 18. Ces dernières sont orientées, par exemple, sensiblement perpendiculairement à ladite direction de prise en étau 17. Leurdit plot support 19 coulisse, grâce à des contacts à billes, sur des rails de guidage 20, à travers une fente 21 ménagée dans ladite plaque support 13. Lesdits rails de guidage 20 et ladite fente 21 sont orientés eux aussi selon ladite direction de prise en étau 17.

Les chariots 15 sont prévus, par exemple, tous les deux mobiles afin de pouvoir restés symétriques par rapport au milieu de la nacelle quel que soit leur écartement.

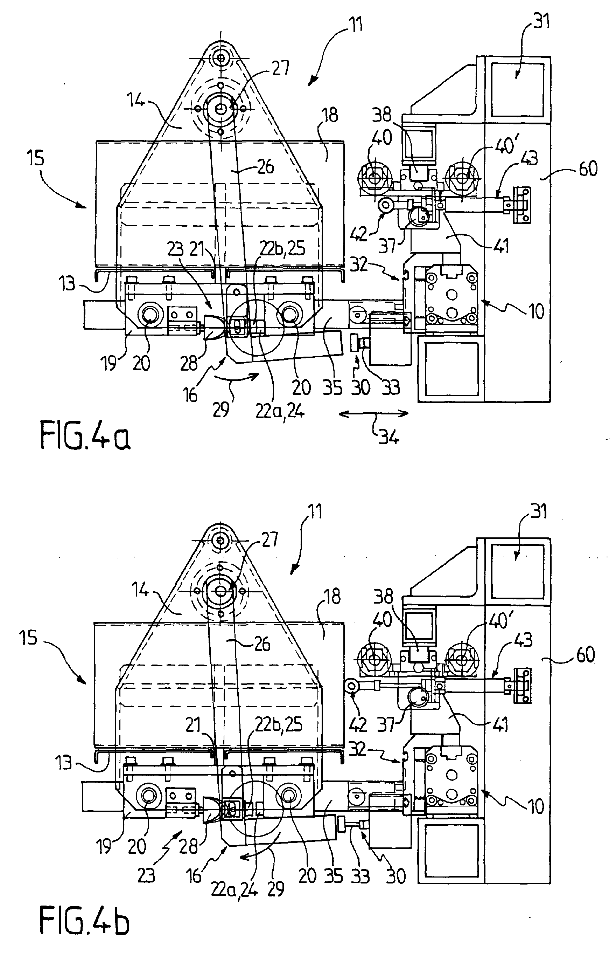

Comme plus particulièrement illustrés, aux figures 4a et 4b, lesdits moyens 16 de maintien des chariots 15 sont constitués, notamment, de premiers et seconds moyens de blocage 22a, 22b, aptes à s'engrener l'un dans l'autre, les premiers moyens de blocage 22a étant assujettis audit chariot 15 et les seconds moyens de blocage 22b étant articulés par rapport à ladite nacelle 11. Lesdits moyens 16 de maintien des chariots sont également constitués de moyens de verrouillage 23 portés par la nacelle 11, lesdits moyens de verrouillage 23 étant aptes à forcer l'engrenage desdits seconds moyens de blocage 22b dans lesdits premiers moyens de blocage 22a.

Lesdits premiers moyens de blocage 22a sont constitués, par exemple, de rails crémaillères 24 assujettis aux plots 19 des chariots 15 et de taille correspondant à celle desdits plots, tandis que les seconds moyens de blocage 22b sont constitués d'un autre rail crémaillère 25, apte à venir s'engrener dans les rails crémaillères 24 des plots 19. Ledit rail crémaillère 25 des seconds moyens de blocage 22b s'étend longitudinalement sous la plaque support 13 de ladite nacelle 11 vis-à-vis de laquelle il est articulé par l'intermédiaire de bras 26, reliés à chacune de ses extrémités, lesdits bras étant montés sur des pivots 27 situés au niveau des flancs 14 desdites nacelles 11.

Lesdits rails crémaillères 24, 25 desdits premiers et seconds moyens de blocage 22a, 22b sont orientés, par exemple, selon ladite direction de prise en étau 17. Lesdits bras 26 et le rail crémaillère 25 des seconds moyens de blocage 22b sont alors articulés autour d'un axe orienté selon la même direction.

Lesdits moyens de verrouillage 23 sont constitués, par exemple, d'un doigt 28, faisant ressort, non représenté, prenant appui, directement ou non, au niveau des flancs latéraux 14 de la nacelle 11 de façon à ce que ledit doigt force la rotation selon la flèche repérée 29 desdits bras 26 et, par conséquence, l'engrenage des crémaillères 24, 25 les unes dans les autres.

Lesdits moyens 10, 10' pour faire passer lesdits moyens de serrage 6 de leur configuration ouverte à leur configuration de maintien des produits, ou inversement, sont constitués, par exemple :
- d'au moins un premier vérin 30, assujetti à une armature fixe 31 par rapport à laquelle les nacelles 11 circulent, le ou lesdits premiers vérins 30 étant aptes à agir sur lesdits moyens de verrouillage 23 pour désengrener lesdits premiers et seconds moyens de blocage 22a, 22b et les laisser libres l'un par rapport à l'autre,
- de seconds vérins 32 assujettis à ladite armature fixe 31, lesdits seconds vérins 32 étant aptes à faire coulisser lesdits chariots 15 selon ladite direction de prise en étau 17 entre ladite configuration ouverte et ladite configuration de maintien des produits ou inversement.

Il est prévu, notamment, deuxdits premiers vérins 30, c'est-à-dire, un pour chaque bras 26. Lesdits premiers vérins 30 présentent une tige 33 se déplaçant dans une direction repérée 34 perpendiculaire à la direction 17 de prise en étau pour forcer une rotation des bras 26 dans le sens inverse à celle qui leur est imposée par le doigt 28. Lesdits bras 26 se présentent, par exemple, sous la forme d'un L, ladite tige 33 des premiers vérins 30 agissant à l'une des extrémités de l'une des branches du L tandis que ledit doigt 28 des moyens de verrouillage 23 agit sur l'autre branche.

Il est prévu, par exemple, undit second vérin 32 pour chacun des chariots 15. Ces derniers sont entraînés par lesdits seconds vérins 32 par l'intermédiaire d'un doigt 35 coopérant avec les plots 19 desdits chariots 15.

On donne dans la suite, à titre d'exemple, le fonctionnement des moyens évoqués plus haut lors de l'arrivée d'une nacelle 11 au niveau du ou des postes d'entrée 3. Lesdites nacelles 11 se présentent vides tandis que les chariots 15 sont dans leur configuration ouverte et les crémaillères 24, 25 engrenées l'une dans l'autre, sous l'action du doigt 28. Un paquet 2 de produits 1 est introduit dans ladite nacelle 11 entre lesdites plaques de pression 18. Lesdits premiers vérins 30 sont ensuite activés pour déverrouiller lesdites crémaillères 24, 25 et les seconds vérins 32 font passer les chariots 15 de leur configuration ouverte à leur configuration de maintien des produits. Les premiers vérins 30 sont désactivés afin de laisser les crémaillères 24, 25 s'engrener de nouveau l'une dans l'autre. La circulation de la nacelle 11 est alors autorisée.

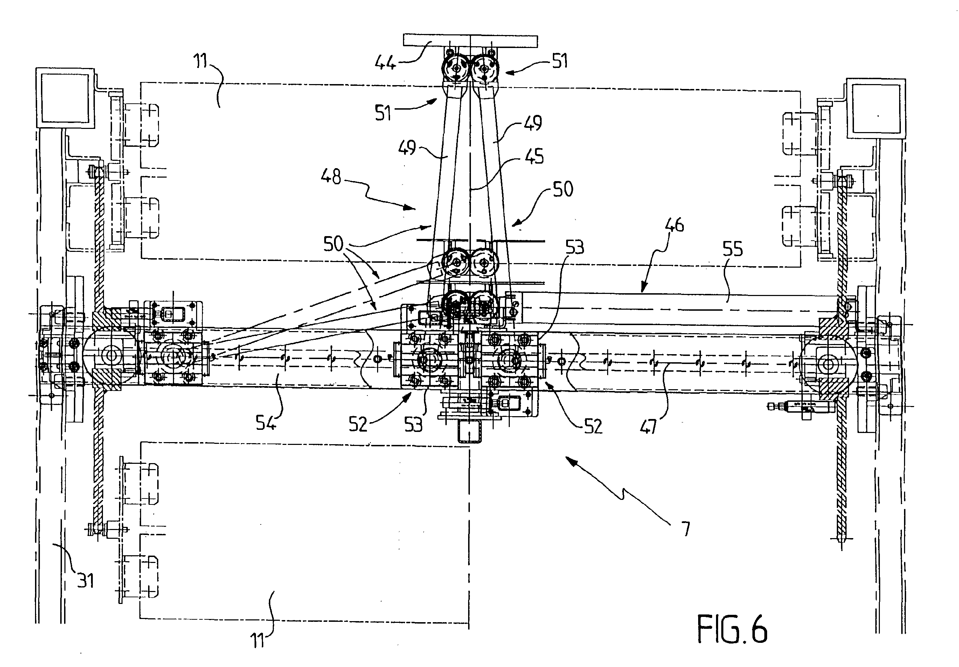

Comme plus particulièrement illustré à la figure 5, le dispositif conforme à l'invention pourra encore comprendre des moyens 36 pour adapter ladite configuration de maintien des produits. Il s'agit, par exemple, de butée 37, mobile par rapport à ladite armature fixe 31, lesdites butées 37 étant aptes à limiter la course desdits seconds vérins 32 de façon à régler l'écartement minimum desdits chariots 15.

Afin de permettre le positionnement desdites butées 37, ledit dispositif comprend, notamment, un rail 38 de guidage de ces dernières, parallèle à ladite direction de prise en étau 17, ainsi qu'un volant 39 et une tige 40, 40' d'entraînement desdites butées 37. Comme cela apparaît plus particulièrement aux figures 4a et 4b, lesdites butées 37 et lesdits seconds vérins 32 coopèrent entre eux par l'intermédiaire d'un doigt 41 assujetti audit second vérin 32.

Au niveau du ou desdits postes d'entrée 3, le dispositif conforme à l'invention pourra également comprendre des moyens pour retenir les produits dans la nacelle 11 lors de leur introduction. Il s'agit, notamment, d'une butée 42 escamotable actionnée par un ou plusieurs vérins 43. Celle-ci est active lorsque les moyens de verrouillage 23 sont neutralisés par lesdits premiers vérins 30, et désactivés dans le cas inverse. Elle est entraînée selon la même direction 34 que la tige 33 desdits premiers vérins 30.

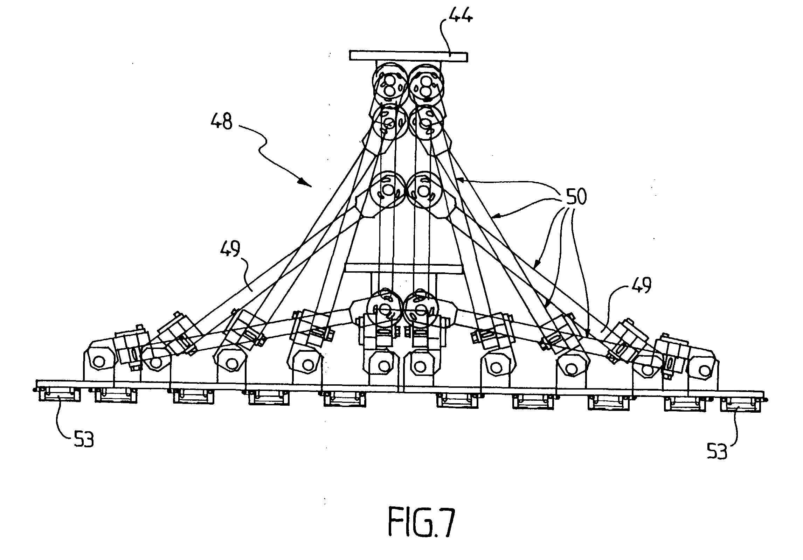

Si l'on se reporte maintenant aux figures 6 et 7, on constate que lesdits moyens d'éjection 7 comprennent, par exemple, une butée de poussée 44 et des moyens de déplacement de ladite butée de poussée selon une première direction. Ces derniers sont constitués de moyens 46 aptes à générer un effort selon une seconde direction 47, sensiblement perpendiculaire à ladite première direction 45, et de moyens de transmission 48 dudit effort, coopérant avec ladite butée 44.

Ladite première direction 45 est, par exemple, sensiblement parallèle au plan occupé par ladite plaque support 13 des nacelles 11 et par lesdites plaques de pression 18 des chariots 15, lorsque lesdites nacelles se trouvent au niveau du ou desdits postes d'entrée 4. Ladite seconde direction 47 est, notamment, sensiblement parallèle à ladite direction de prise en étau 17. On peut ainsi répartir l'encombrement des moyens d'éjection 7 et les loger dans l'armature 31 sur laquelle ils peuvent alors prendre appui.

Comme plus particulièrement illustré à la figure 7, lesdits moyens de transmission 48 sont constitués, notamment, de deux bras 49, formant les deux côtés égaux d'un triangle isocèle 50 dont l'axe de symétrie est défini par ladite première direction 45, et de moyens pour rapprocher / écarter lesdits bras 49 en déformant ledit triangle 50 tout en maintenant son caractère isocèle et l'orientation de son axe de symétrie. Ledit triangle 50 est déformé, par exemple, dans le plan défini par lesdites premières et secondes directions 45, 47.

Lesdits bras 49 présentent une extrémité 51 coopérant l'une avec l'autre, par exemple, par engrenage, au niveau de ladite butée de poussée 44. Les extrémités opposées 52 desdits bras 49 sont montées en articulation sur des patins 53, coulissant sur un rail 54 sensiblement perpendiculaire à l'axe de symétrie dudit triangle isocèle 50.

Lesdits moyens pour générer un effort 46 sont constitués, notamment, d'au moins un vérin 55 entraînant, directement ou indirectement, lesdits patins 54, par exemple par l'intermédiaire d'une courroie de transmission.

Si l'on se reporte de nouveau à la figure 1, on constate que lesdits moyens 9 pour gérer une accumulation de paquets 2 sont constitués, notamment, comme déjà évoqué, de moyens pour faire varier la longueur de la trajectoire suivie par lesdits moyens de transport 8. La courroie 12 de ces derniers forme alors une boucle de longueur fixe à laquelle lesdites nacelles 11 sont accrochées tout en permettant leur balancement.

Lesdits moyens pour faire varier la longueur de la trajectoire des paquets sont constitués, par exemple :
- d'une première paire de tambours 56a, 56b, servant à l'entraînement de ladite courroie 12, dit tambour moteur,
- de moyens d'actionnement 57 desdits tambours moteur 56a, 56b, aptes à les faire fonctionner selon deux vitesses respectives distinctes,
- d'une seconde paire de tambours 58a, 58b autour desquels la courroie 12 défile, le premier 58a et le second 58b tambours de ladite seconde paire étant respectivement prévus entre le premier 56a et le second 56b tambours moteur et entre le second 56b et le premier 56a tambours moteur, selon le sens de défilement de la courroie 12, lesdits premier 58a et second 58b tambours de ladite seconde paire étant maintenus à une distance constante l'un de l'autre et ladite seconde paire étant mobile par rapport à ladite première paire.

Lesdits tambours moteur 56a, 56b sont assujettis, par exemple, à la dite armature 31, tandis que ladite seconde paire de tambours 58a, 58b est mobile par rapport à celle-ci, notamment par l'intermédiaire de rails, non représentés, dans lesquels les extrémités de leur axe de pivotement se déplacent. Selon l'exemple illustré, ladite seconde paire de tambours se déplace verticalement.

Le dispositif conforme à l'invention pourra également comprendre une autre paire de tambours 59a, 59b, fixes, permettant d'allonger la trajectoire entre le ou les postes d'entrée 3 et le ou les postes de sortie 4 en limitant l'encombrement du dispositif. Ils sont situés de part et d'autre du premier tambour 58a de ladite seconde paire.

On donne dans la suite, à titre d'exemple, le fonctionnement des moyens évoqués plus haut. Lorsque les deux tambours moteur 56a, 56b fonctionnent à la même vitesse, les tambours 58a, 58b de ladite seconde paire restent au même niveau et la quantité de nacelles 11 accumulées est constante. Lorsque le tambour moteur 56a se trouvant du côté du ou desdits postes d'entrée 3 fonctionne tandis que le tambour moteur 56b se trouvant du côté du ou desdits postes de sortie 4 est à l'arrêt, ladite seconde paire de tambours 58a, 58b descend et la quantité de nacelles 11 accumulées augmente. Lorsque le tambour moteur 56a se trouvant du côté du ou desdits postes d'entrée 3 est à l'arrêt et que le tambour moteur 56b se trouvant du côté du ou desdits postes de sortie 4 fonctionne, ladite seconde paire de tambours 58a, 58b remonte et la quantité de nacelles accumulées diminue.

Cela étant, pour permettre l'introduction et l'éjection des paquets 2, le dispositif conforme à l'invention pourra fonctionner en pas à pas.

L'armature 31 servant au support des différents moyens de l'invention est constituée, notamment, d'un ensemble de poutres tubulaires 60 assemblées les unes aux autres.

Naturellement, d'autres modes de mise en oeuvre, à la portée de l'homme de l'art, auraient pu être envisagés sans pour autant sortir du cadre de l'invention.

## Revendications

1. Procédé de stockage en ligne de paquets (2) de produits plats (1) tels que, notamment, changes ou serviettes périodiques, dans lequel on transporte lesdits produits entre un ou plusieurs postes d'entrée (3) et un ou plusieurs postes de sortie (4) et dans lequel :
- on introduit lesdits paquets selon un débit d'arrivée au niveau du ou desdits postes d'entrée (3) entre des moyens de serrage (6), mobiles avec lesdits paquets, lesdits moyens de serrage (6) étant dans une première configuration, dite ouverte,
- on comprime lesdits produits les uns contre les autres en faisant passer lesdits moyens de serrage (6) de leur configuration ouverte à une seconde configuration, dite de maintien des produits,
- on dirige lesdits paquets vers le ou lesdits postes de sortie (4) au niveau duquel ou desquels on les éjecte, selon un débit de sortie, adapté en relation avec le débit d'arrivée, pour gérer une accumulation de paquets entre le ou lesdits postes d'entrée (3) et le ou lesdits postes de sortie (4).

2. Procédé selon la revendication 1, dans lequel on fait circuler lesdits moyens de serrage (6) en boucle en les dirigeant, après éjection des paquets, du ou desdits postes de sortie (4) vers le ou lesdits postes d'entrée (3), et on fait passer lesdits moyens de serrage (6) de leur configuration de maintien des produits à leur configuration ouverte.

3. Procédé selon les revendications 1 ou 2, dans lequel on fait circuler lesdits paquets entre le ou lesdits postes d'entrée (3) et le ou lesdits postes de sortie (4) selon une trajectoire de longueur variable, fonction du débit d'entrée et/ou de sortie, pour gérer ladite accumulation.

4. Procédé selon l'une quelconque des revendications 1 à 3, dans lequel on prévoit un flux de paquets de taille variable et on adapte ladite configuration de maintien selon la taille des paquets à transporter.

5. Dispositif de stockage en ligne de paquets de produits plats, tels que, notamment changes ou serviettes périodiques, comprenant un ou plusieurs postes d'entrée (3) et un ou plusieurs postes de sortie (4) ainsi que des moyens de transport (8) desdits paquets entre le ou lesdits postes d'entrée (3) et le ou lesdits postes de sortie (4), ledit dispositif comprenant en outre :
- des moyens de serrage (6), mobiles avec lesdits moyens de transport (8) des paquets, lesdits moyens de serrage (6) étant aptes à passer d'une première configuration, dite ouverte, permettant l'introduction des paquets dans lesdits moyens de transport (8), selon un débit d'arrivée, à une seconde configuration, dite de maintien des produits, dans laquelle ces derniers sont comprimés les uns contre les autres,
- des moyens (10) pour faire passer lesdits moyens de serrage (6) de leur configuration ouverte à leur configuration de maintien des produits, prévus au niveau du ou desdits postes d'entrée,
- des moyens (7) d'éjection des paquets, prévus au niveau du ou desdits postes de sortie pour le départ des paquets selon un débit de sortie,
- des moyens (9) pour gérer une accumulation des paquets entre le ou les postes d'entrée (3) et le ou les postes de sortie (4),en fonction du débit d'entrée et/ou du débit de sortie.

6. Dispositif selon la revendication 5, dans lequel lesdits moyens de transport (8) suivent une trajectoire en boucle, ledit dispositif comprenant des moyens pour faire passer lesdits moyens de serrage (6) de leur configuration de maintien des produits à leur configuration ouverte, prévus, dans le sens de la progression des moyens de transport, entre le ou lesdits postes de sortie (4) et/ou le ou lesdits postes d'entrée (3) et/ou au niveau de ceux-ci.

7. Dispositif selon la revendication 6, dans lequel lesdits moyens pour faire passer lesdits moyens de serrage (6) de leur configuration de maintien des produits à leur configuration ouverte sont prévus au niveau du ou desdits postes de sortie (4).

8. Dispositif selon la revendication 5, dans lequel :
- lesdits moyens de transport (8) comprennent une pluralité de nacelles (11), chaque dite nacelle (11) étant apte à accueillir au moins undit paquet,
- lesdits moyens de serrage (6) sont constitués de deux chariots (15) coulissant selon une même direction (17), dite de prise en étau, sur ladite nacelle 11 et de moyens (16) de maintien desdits chariots selon un écartement donné.

9. Dispositif selon la revendication 8, dans lequel lesdits moyens de maintien (16) des chariots (15) sont constitués de premiers et seconds moyens de blocage (22a, 22b) aptes à s'engrener l'un dans l'autre, les premiers moyens de blocage (22a) étant assujettis audit chariot (15) et lesdits seconds moyens de blocage (22b) étant articulés par rapport à ladite nacelle (11), ainsi que des moyens de verrouillage (23), portés par la nacelle (11), lesdits moyens de verrouillage (23) étant aptes à forcer l'engrenage desdits seconds moyens de blocage (22b) dans lesdits premiers moyens de blocage (22a).

10. Dispositif selon la revendication 9, dans lequel lesdits moyens (10) pour faire passer lesdits moyens de serrage (6) de leur configuration ouverte à leur configuration de maintien des produits sont constitués :
- d'au moins un premier vérin (30), assujetti à une armature fixe (31) par rapport à laquelle les nacelles (11) circulent, le ou lesdits premiers vérins (30) étant aptes à agir sur lesdits moyens de verrouillage (23) pour désengrener lesdits premiers et seconds moyens de blocage (22a, 22b) et les laisser libres l'un par rapport à l'autre,
- de seconds vérins (32) assujettis à ladite armature fixe (31), lesdits seconds vérins (32) étant aptes à faire coulisser lesdits chariots (15) selon ladite direction de prise en étau (17) entre ladite configuration ouverte et ladite configuration de maintien des produits.

11. Dispositif selon la revendication 10, comprenant des moyens (36) pour adapter ladite configuration de maintien des produits.

12. Dispositif selon la revendication 11, dans lequel lesdits moyens (36) pour adapter la configuration de maintien des produits sont constitués de butées (37), mobiles par rapport à ladite armature fixe (31), lesdites butées (37) étant aptes à limiter la course desdits seconds vérins (32) de façon à régler l'écartement minimum desdits chariots (15).

13. Dispositif selon la revendication 5, dans lequel lesdits moyens d'éjection (7) comprennent une butée de poussée (44) et des moyens de déplacement de ladite butée de poussée selon une première direction (45), ces derniers moyens étant constitués de moyens (46) aptes à générer un effort selon une seconde direction (47), sensiblement perpendiculaire à ladite première direction (45) et de moyens de transmission (48) dudit effort, coopérant avec ladite butée (44).

14. Dispositif selon la revendication 13, dans lequel lesdits moyens de transmission (48) sont constitués de deux bras (49), formant les deux côtés égaux d'un triangle isocèle (50) dont l'axe de symétrie est défini par ladite première direction (45), et de moyens pour rapprocher / écarter lesdits bras (49) en déformant ledit triangle (50) tout en maintenant son caractère isocèle et l'orientation de son axe de symétrie.

15. Dispositif selon la revendication 14, dans lequel lesdits bras (49) présentent une extrémité (51) coopérant l'une avec l'autre, au niveau de ladite butée de poussée (44), les extrémités opposées (52) desdits bras (49) étant montés en articulation sur des patins (53) coulissant sur un rail (54) sensiblement perpendiculaire à l'axe de symétrie dudit triangle isocèle.

16. Dispositif selon la revendication 15, dans lequel lesdits moyens (46) pour générer un effort sont constitués d'au moins un vérin (55) entraînant, directement ou indirectement, lesdits patins (54).

17. Dispositif selon la revendication 16, dans lequel lesdits moyens (9) pour gérer une accumulation de paquets sont constitués de moyens pour faire varier la longueur de la trajectoire suivie par lesdits moyens de transport (8).

18. Dispositif selon la revendication 17, dans lequel lesdits moyens de transport (8) comprennent au moins une courroie (12) formant une boucle de longueur fixe et dans lequel lesdits moyens pour faire varier la longueur de la trajectoire sont constitués :
- d'une première paire de tambours (56a, 56b), servant à l'entraînement de ladite courroie (12), dit tambour moteur,
- de moyens d'actionnement desdits tambours moteurs (56a, 56b) aptes à les faire fonctionner selon deux vitesses respectives distinctes,
- d'une seconde paire de tambours (58a, 58b) autour desquels la courroie (12) défile, le premier (58a) et le second (58b) tambours de ladite seconde paire étant respectivement prévue entre le premier (56a) et le second (56b) tambours moteur et entre le second (56b) et le premier (56a) tambours moteur, selon le sens de défilement de ladite courroie (12), lesdits premiers (58a) et seconds (58b) tambours de ladite seconde paire étant maintenus à une distance constante l'un de l'autre et ladite seconde paire étant mobile par rapport à ladite première paire.
